# EUROPEAN PATENT APPLICATION

(11) **EP 4 818 769 A1**
(43) Date of publication of application: **07.10.2026**
(21) Application number: 24895931.4
(22) Date of filing: 20.09.2024
(51) Int. Cl.: G02B 3/14, G02B 1/06

(54) **OPTICAL APPARATUS, LENS AND LENS ADJUSTING SYSTEM**

(30) Priority: 30.11.2023 CN 202323273085 U
(71) Applicant: BYD Company Limited, Shenzhen, Guangdong 518118 (CN)
(72) Inventor: GONG, Qing, Shenzhen, Guangdong 518118 (CN); SONG, Yi, Shenzhen, Guangdong 518118 (CN); SUN, Yaxuan, Shenzhen, Guangdong 518118 (CN); WANG, Baoqing, Shenzhen, Guangdong 518118 (CN); ZUO, Hong, Shenzhen, Guangdong 518118 (CN)
(74) Representative: Taor, Simon Edward William
(86) International application number: PCT/CN2024/120213
(87) International publication number: WO 2025/112833

(57) **Abstract**

An optical apparatus, a lens and a lens adjusting system. The optical apparatus includes a housing and a light-transmitting structure arranged on the housing. The housing and the light-transmitting structure define a chamber adapted to accommodate a first liquid and a second liquid that have different refractive indexes and are immiscible with each other. The chamber includes a first wall configured to provide surface energy that limits the movement of the first liquid, and a second wall configured to provide surface energy that limits the movement of the second liquid. The first wall and the second wall are each provided with at least one through hole leading to a control component, so as for an adjustment of the amount of the first liquid and the second liquid to change the radius of curvature of the interface of the first liquid and the second liquid.

## Description

### CROSS-REFERENCE TO RELATED APPLICATIONS

The present disclosure claims priority to Chinese Patent Application No. 202323273085.4 filed on November 30, 2023, entitled "OPTICAL APPARATUS, LENS AND LENS ADJUSTING SYSTEM", which is incorporated herein by reference in its entirety.

### FIELD

The present disclosure relates to the technical field of liquid lens, and in particular to an optical apparatus, a lens and a lens adjusting system.

### BACKGROUND

In the related art, a more mature liquid lens is a variable-focus optical lens using the electrowetting-on-dielectric principle. Electrowetting refers to a phenomenon that a droplet is deformed and displaced by applying a voltage between upper and lower substrates to change a contact angle. The liquid lens is specifically constructed by encapsulating two liquids in a cylindrical container with both surfaces transparent. One of the liquids is a conductive aqueous solution, and the other is a non-conductive oil solution. The focal length is changed by changing the radius of curvature of the interface between two liquids through electric field driving. However, the electrowetting phenomenon causes increased energy consumption, and there are safety risks such as electric leakage in the use of the liquid lens.

### SUMMARY

The purpose of the present disclosure is to provide an optical apparatus, a lens and a lens adjusting system, which can reduce energy consumption, improve safety, and achieve precise focusing, to at least partially solve the above technical problems.

To achieve the above purpose, according to a first aspect of the present disclosure, an optical apparatus is provided, and the optical apparatus includes:
a housing; and
a light-transmitting structure arranged on the housing, the housing and the light-transmitting structure define a chamber configured to accommodate a first liquid and a second liquid having different refractive indexes and being immiscible with each other, the light-transmitting structure is configured to form a light path for light together with the first liquid and the second liquid, the chamber includes a first wall configured to be in contact with the first liquid and a second wall configured to be in contact with the second liquid, the first wall is configured to provide surface energy for limiting movement of the first liquid, the second wall is configured to provide surface energy for limiting movement of the second liquid, the first wall and the second wall are each arranged with at least one through hole, and the at least one through hole is configured to communicate with a control assembly to adjust the quantities of the first liquid and the second liquid through the control assembly to change a radius of curvature of an interface between the first liquid and the second liquid.

In an embodiment, the first wall is at least partially configured as a hydrophilic and oleophobic structure, and the second wall is at least partially configured as an oleophilic and hydrophobic structure.

In an embodiment, the first wall includes a first composite layer, and the first composite layer includes a first support layer and a hydrophilic and oleophobic structure stacked on the inner side of the first support layer; and/or,
the second wall includes a second composite layer, and the second composite layer includes a second support layer and an oleophilic and hydrophobic structure stacked on the inner side of the second support layer.

In an embodiment, the first wall includes a first plate body and a first sealing member, the second wall includes a second plate body and a sealing member, the first sealing member and the second sealing member are abutted and located between the first plate body and the second plate body, the light-transmitting structure includes a first light-transmitting part connected to the first plate body and a second light-transmitting part connected to the second plate body, and the first sealing member, the second sealing member, the first plate body, the second plate body, the first light-transmitting part and the second light-transmitting part jointly define the chamber, the first sealing member includes the hydrophilic and oleophobic structure, and the second sealing member includes the oleophilic and hydrophobic structure.

In an embodiment, at least one of the first light-transmitting part and the second light-transmitting part is perpendicular to a central axis of the interface.

In an embodiment, the first plate body is arranged with a first light-transmitting hole, and the first light-transmitting part is configured as a first optical lens covering the first light-transmitting hole, and/or the second plate body is arranged with a second light-transmitting hole, and the second light-transmitting part is configured as a second optical lens covering the second light-transmitting hole.

In an embodiment, a radial dimension of the first light-transmitting hole and/or the second light-transmitting hole is not less than 30 mm.

In an embodiment, the first sealing member and the second sealing member have the same inner diameter, and a length of at least one of the first sealing member and the second sealing member along the central axis of the interface is not less than one fifth of the inner diameter of the first sealing member or the second sealing member.

In an embodiment, the first plate body and the second plate body are connected by a connecting assembly, to ensure that the first sealing member and the second sealing member are clamped between the first plate body and the second plate body.

According to a second aspect of the present disclosure, a lens is provided, and the lens includes the optical apparatus, and a first liquid and a second liquid filled in the chamber.

In an embodiment, the first liquid is a hydrophilic medium, and the second liquid is an oleophilic medium.

In an embodiment, the first liquid and the second liquid have the same density.

According to a third aspect of the present disclosure, a lens adjusting system is provided, and the lens adjusting system includes the lens and the control assembly.

In an embodiment, the control assembly includes a first liquid quantity control structure and a second liquid quantity control structure, the first liquid quantity control structure includes a first liquid inlet pipe communicated with the through hole in the first wall and a first pumping device arranged on the first liquid inlet pipe, and the second liquid quantity control structure includes a second liquid inlet pipe communicated with the through hole in the second wall and a second pumping device arranged on the second liquid inlet pipe.

In an embodiment, the control assembly further includes a first liquid outlet pipe, a second liquid outlet pipe and a liquid storage structure, the first liquid outlet pipe is communicated with another through hole in the first wall, and the second liquid outlet pipe is communicated with another through hole in the second wall.

The first liquid outlet pipe is communicated with the liquid storage structure, and a stop valve is arranged on each of the first liquid inlet pipe and the second liquid outlet pipe, or
the second liquid outlet pipe is communicated with the liquid storage structure, and a stop valve is arranged on each of the second liquid inlet pipe and the first liquid outlet pipe.

In an embodiment, the control assembly includes a pumping device, the pumping device is communicated with the through hole in the first wall through a first liquid pipe, and the pumping device is communicated with the through hole in the second wall through a second liquid pipe.

According to the technical solution, the quantities of the first liquid and the second liquid can be changed through the control assembly to change the radius of curvature of the interface between the first liquid and the second liquid, thereby adjusting the focal length. The first wall of the chamber provides the surface energy for limiting the movement of the first liquid, and the second wall of the chamber provides the surface energy for limiting the movement of the second liquid, when the quantities of the first liquid and the second liquid are changed through the control assembly, the portion of the first liquid close to the first wall and the portion of the second liquid close to the second wall are not easy to flow, and the remaining liquid of the first liquid away from the first wall and the remaining liquid of the second liquid away from the second wall flow, the surface shape of the interface between the first liquid and the second liquid changes to be convex or concave, and the radius of curvature changes, thereby reducing energy consumption, improving safety and achieving precise focusing.

Other features and advantages of the present disclosure will be described in detail in the following detailed description.

### BRIEF DESCRIPTION OF THE DRAWINGS

The accompanying drawings are included to provide a further understanding of the present disclosure, and constitute a part of the specification, which together with the detailed description, serve to explain the present disclosure, but do not limit the present disclosure. In the drawings:
FIG. 1 is a schematic diagram of an overall structure of an optical apparatus according to an exemplary embodiment of the present disclosure.
FIG. 2 is a schematic diagram of an exploded structure of the optical apparatus according to the exemplary embodiment of the present disclosure.
FIG. 3 is a schematic diagram of a structure in which an interface between a first liquid and a second liquid is convex according to the exemplary embodiment of the present disclosure.
FIG. 4 is a schematic diagram of a structure in which an interface between a first liquid and a second liquid is concave according to the exemplary embodiment of the present disclosure.

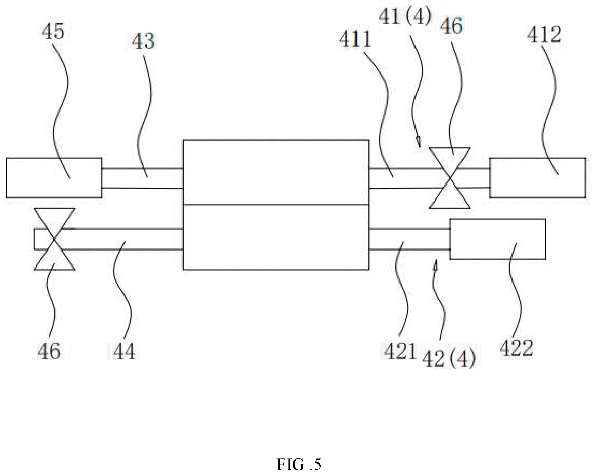

FIG. 5 is a schematic diagram of a lens adjusting system according to the exemplary embodiment of the present disclosure.

### DETAILED DESCRIPTION

The specific embodiments of the present disclosure will be described below in detail with reference to the accompanying drawings. It should be understood that the specific embodiments described herein are merely used to illustrate and explain the present disclosure, and are not used to limit the present disclosure.

In the present disclosure, unless otherwise specified, "inner, outer" refers to the inside and outside of the contour of the corresponding component; "far, near" refers to the far and near of the spatial position of the corresponding component relative to another component. In addition, the terms "first", "second" and the like used in the present disclosure are used to distinguish one element from another element, and do not have order and importance. When the following description refers to the drawings, the same reference numerals in different drawings represent the same or similar elements, unless otherwise indicated.

A lens and a lens adjusting system in the exemplary embodiments of the present disclosure will be described below with reference to the drawings.

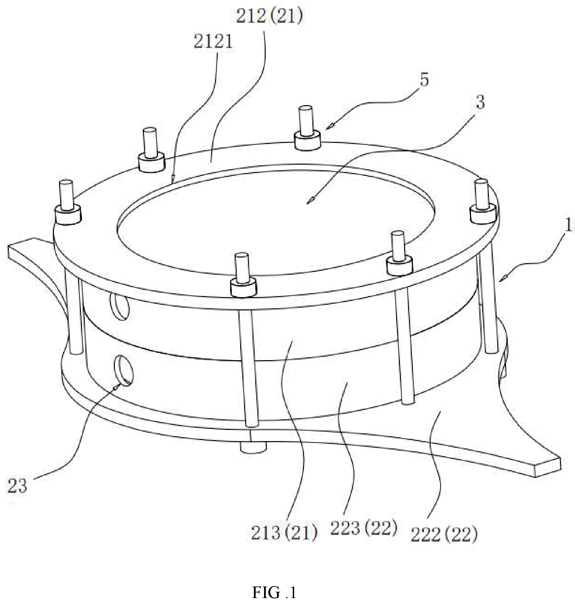

According to a first aspect of the present disclosure, referring to FIGS. 1 to 4, the present disclosure provides an optical apparatus, the optical apparatus includes a housing 1 and a light-transmitting structure 3 arranged on the housing 1, the housing 1 and the light-transmitting structure 3 define a chamber 2 configured to accommodate a first liquid and a second liquid having different refractive indexes and being immiscible with each other, the light-transmitting structure 3 is configured to form a light path for light together with the first liquid and the second liquid, the chamber 2 includes a first wall 21 configured to be in contact with the first liquid and a second wall 22 configured to be in contact with the second liquid, the first wall 21 is configured to provide surface energy for limiting movement of the first liquid, the second wall 22 is configured to provide surface energy for limiting movement of the second liquid, and the first wall 21 and the second wall 22 each are arranged with at least one through hole 23, and the at least one through hole 23 is configured to communicate with a control assembly 4 to adjust the quantities of the first liquid and the second liquid through the control assembly 4 to change a radius of curvature of an interface between the first liquid and the second liquid. The surface energy is an important property of the interaction between particles of a substance, and refers to the increase in the free enthalpy of a system per unit increase in surface area. In the present disclosure, the surface energy can be understood as being capable of describing the interaction between a liquid (the first liquid and the second liquid) and a solid (the first wall 21 and the second wall 22), i.e., the first wall 21 is configured to provide the surface energy for limiting the movement of the first liquid and the second wall 22 is configured to provide the surface energy for limiting the movement of the second liquid, which is specifically manifested as the retention of the first liquid on the first wall 21 and the second liquid on the second wall 22.

By the technical solution, when the optical apparatus is filled with the first liquid and the second liquid to serve as a lens, the quantities of the first liquid and the second liquid can be changed through the control assembly 4 to change the radius of curvature of the interface between the first liquid and the second liquid, thereby adjusting the focal length, wherein the first wall 21 of the chamber 2 provides the surface energy for limiting the movement of the first liquid, and the second wall 22 of the chamber 2 provides the surface energy for limiting the movement of the second liquid, when the quantities of the first liquid and the second liquid are changed through the control assembly 4, the portion of the first liquid close to the first wall 21 and the portion of the second liquid close to the second wall 22 are not easy to flow, and the remaining liquid of the first liquid away from the first wall 21 and the remaining liquid of the second liquid away from the second wall 22 flow, the surface shape of the interface between the first liquid and the second liquid changes to be convex, flat or concave, and the radius of curvature changes, thereby reducing energy consumption, improving safety, and achieving precise focusing. For a liquid lens based on the electrowetting principle, as the aperture of the liquid lens increases, the applied voltage needs to be greatly increased to meet the zooming requirement, therefore, on the one hand, the energy consumption is greatly increased, and on the other hand, there are safety risks such as electric leakage in the use of the liquid lens, and even in the use of the large-aperture liquid lens, increasing the applied voltage cannot meet the zooming requirement, the liquid lens based on the electrowetting principle is limited in the field of large-aperture liquid lenses, but the lens provided by the present disclosure can achieve, but is not limited to, zooming of the large-aperture liquid lens.

Meanwhile, the optical apparatus provided by the present disclosure does not use the elastic light-transmitting film, and the influence of problems such as uneven deformation or surface roughness of the elastic light-transmitting film on the lens performance such as imaging quality and imaging stability is avoided.

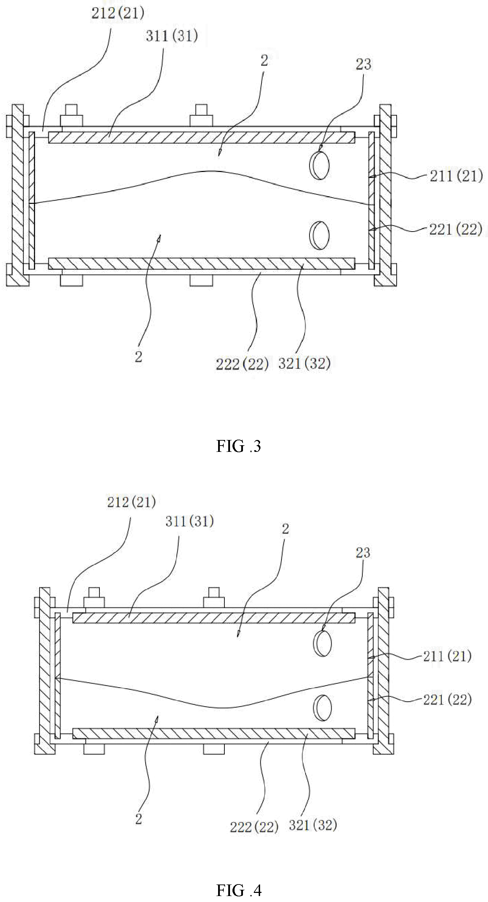

The present disclosure herein illustrates exemplarily some embodiments of the chamber 2 configured to accommodate the first liquid and the second liquid. In some embodiments, as shown in FIG. 3, the second liquid is added to the lower portion of the chamber 2 through the control assembly 4, and the first liquid is reduced from the upper portion of the chamber 2 through the control assembly 4, the interface between the first liquid and the second liquid is convex to form a positive lens, and the light rays converge after sequentially passing through the light-transmitting structure 3 arranged on the housing 1, the first liquid and the second liquid; in some embodiments, as shown in FIG. 4, the first liquid is added to the upper portion of the chamber 2 through the control assembly 4, and the second liquid is reduced from the lower portion of the chamber 2 through the control assembly 4, the interface of the first liquid and the second liquid is concave to form a negative lens, and the light rays diverge after sequentially passing through the light-transmitting structure 3 arranged on the housing 1, the first liquid and the second liquid. It can be understood that the quantities of the first liquid and the second liquid in the chamber 2 can be adjusted through the control assembly 4 to change the radius of curvature of the interface between the first liquid and the second liquid, thereby adjusting the focal length.

The first wall 21 is configured to provide the surface energy for limiting the movement of the first liquid. It can be understood that the first wall 21 can have a property of providing the surface energy for limiting the movement of the first liquid by defining a material or structure of the first wall 21. Similarly, the second wall 22 is configured to provide the surface energy for limiting the movement of the second liquid. It can be understood that the second wall 22 can have a property of providing the surface energy for limiting the movement of the second liquid by defining a material or structure of the second wall 22. For example, in some embodiments, referring to FIGS. 1 to 4, the first wall 21 can be at least partially configured as a hydrophilic and oleophobic structure. Accordingly, the first liquid can be a hydrophilic medium, such as a salt solution or an alcohol solution, such as an aqueous solution of sodium chloride, potassium chloride, sodium sulfate, etc. or ethylene glycol, propylene glycol, propylene carbonate, etc. to provide the surface energy for limiting the movement of the first liquid by the hydrophilic and oleophobic structure. The second wall 22 can be at least partially configured as an oleophilic and hydrophobic structure. Accordingly, the second liquid can be an oleophilic medium, such as a transparent oily liquid, such as silicone oil, germanium oil, dimethyl silicone oil, or an optical fluid, etc. to provide the surface energy for limiting the movement of the oleophilic medium by the oleophilic and hydrophobic structure. It can be understood that the first wall 21 can be entirely composed of a hydrophilic and oleophobic material, and the second wall 22 can be entirely composed of an oleophilic and hydrophobic material. Alternatively, the hydrophilic and oleophobic material is arranged on a side of the first wall 21 close to the hydrophilic medium, and the oleophilic and hydrophobic material is arranged on a side of the second wall 22 close to the oleophilic medium. The hydrophilic and oleophobic material can be a fluoroalkyl acrylic acid oligomer, a modified polypropylene, etc. and the oleophilic and hydrophobic material can be an alkyl ethylene polymer fiber, a long-chain alkyl methacrylate fiber, etc. In this way, when the quantities of the first liquid and the second liquid in the chamber 2 is adjusted through the control assembly 4, for example, the second liquid is added to the lower portion of the chamber 2 through the control assembly 4, and the first liquid is reduced from the upper portion of the chamber 2 through the control assembly 4, at this time, the hydrophilic and oleophobic structure on the first wall 21 provides the surface energy for limiting the first liquid, i.e. the hydrophilic medium, and the oleophilic and hydrophobic structure on the second wall 22 provides the surface energy for limiting the second liquid, i.e. the oleophilic medium, therefore, the portion of the first liquid close to the first wall 21 and the portion of the second liquid close to the second wall 22 are not easy to flow under the action of surface tension, the remaining liquid of the first liquid away from the first wall 21 and the remaining liquid of the second liquid away from the second wall 22 flow, and then the interface between the first liquid and the second liquid is convex to form the positive lens. Similarly, the first liquid is added to the upper portion of the chamber 2 through the control assembly 4, and the second liquid is reduced from the lower portion of the chamber 2 through the control assembly 4, at this time, the hydrophilic and oleophobic structure on the first wall 21 provides the surface energy for limiting the first liquid, i.e. the hydrophilic medium, and the oleophilic and hydrophobic structure on the second wall 22 provides the surface energy for limiting the second liquid, i.e. the oleophilic medium, therefore, the portion of the first liquid close to the first wall 21 and the portion of the second liquid close to the second wall 22 are not easy to flow under the action of surface tension, the remaining liquid of the first liquid away from the first wall 21 and the remaining liquid of the second liquid away from the second wall 22 flow, and then the interface between the first liquid, i.e. the hydrophilic medium, and the second liquid, i.e. the oleophilic medium, is concave to form the negative lens.

It can be understood that, in some embodiments, the first liquid can also be the oleophilic medium, and the second liquid can be the hydrophilic medium. Correspondingly, the first wall 21 is at least partially configured as the oleophilic and hydrophobic structure for providing the surface energy for limiting the movement of the oleophilic medium, and the second wall 22 is at least partially configured as the hydrophilic and oleophobic structure for providing the surface energy for limiting the movement of the hydrophilic medium. The first liquid and the second liquid need to satisfy the conditions of different refractive indexes and immiscible with each other. The position change of the accommodated liquid in the chamber 2 does not affect the function of the lens, and the present disclosure is not limited in this regard.

In some embodiments, referring to FIGS. 1 to 4, the first wall 21 includes a first composite layer 211, the first composite layer 211 includes a first support layer and a hydrophilic and oleophobic structure stacked on the inner side of the first support layer; and/or the second wall 22 includes a second composite layer 221, the second composite layer 221 includes a second support layer and an oleophilic and hydrophobic structure stacked on the inner side of the second support layer. The stacked arrangement of the first support layer and the hydrophilic and oleophobic structure can be understood as that the first support layer and the hydrophilic and oleophobic structure are attached to each other, and the first support layer is located on the side of the hydrophilic and oleophobic structure away from the chamber 2. Similarly, the stacked arrangement of the second support layer and the oleophilic and hydrophobic structure can be understood as that the second support layer and the oleophilic and hydrophobic structure are attached to each other, and the second support layer is located on the side of the oleophilic and hydrophobic structure away from the chamber 2. Thus, the first wall 21 supports the hydrophilic and oleophobic structure inside by the first support layer, so as to provide a mounting carrier for the hydrophilic and oleophobic structure, and the hydrophilic and oleophobic structure provides the surface energy for limiting the first liquid, i.e., the hydrophilic medium. Similarly, the second wall 22 supports the oleophilic and hydrophobic structure inside by the second support layer, so as to provide a mounting carrier for the oleophilic and hydrophobic structure, and the oleophilic and hydrophobic structure provides the surface energy for limiting the second liquid, i.e., the oleophilic medium. The hydrophilic and oleophobic structure and the first support layer, and the oleophilic and hydrophobic structure and the second support layer can be fixed by bonding. Specifically, the materials of the first support layer and the second support layer can be plastics such as ABS, PS, PE, etc., to provide structural support force. The material of the hydrophilic and oleophobic structure can be the fluoroalkyl acrylic acid oligomer, the modified polypropylene, etc., and the material of the oleophilic and hydrophobic structure can be the alkyl ethylene polymer fiber, the long-chain alkyl methacrylate fiber, etc.

In some embodiments, referring to FIGS. 1 to 4, the first wall 21 includes a first plate body 212 and a first sealing member 213, and the second wall 22 includes a second plate body 222 and a second sealing member 223, the first sealing member 213 and the second sealing member 223 are abutted and located between the first plate body 212 and the second plate body 222, the first sealing member 213 and the second sealing member 223 can be fixed by bonding, the first plate body 212 can be formed with a reserved groove for inserting or embedding the first sealing member 213, and similarly, the second plate body 222 can be formed with a reserved groove for inserting or embedding the second sealing member 223, to ensure that the chamber 2 can be better sealed, wherein the materials of the first plate body 212 and the second plate body 222 can be plastics such as ABS, PS, PE, etc. The first sealing member 213 includes the hydrophilic and oleophobic structure, and the second sealing member 223 includes the oleophilic and hydrophobic structure. Specifically, the first sealing member 213 and the second sealing member 223 can be configured as a hollow cylindrical plate body to form a space inside for accommodating the first liquid and the second liquid. In some embodiments, the first sealing member 213 can be the first composite layer 211, i.e., the first sealing member 213 can include the first support layer and the hydrophilic and oleophobic structure stacked on the inner side of the first support layer, and the second sealing member 223 can be the second composite layer 221, i.e., the second sealing member 223 can include the second support layer and the oleophilic and hydrophobic structure stacked on the inner side of the second support layer. In other embodiments, the first sealing member 213 can also be directly used as the hydrophilic and oleophobic structure, i.e., the material of the first sealing member 213 can be, for example, the fluoroalkyl acrylic acid oligomer, the modified polypropylene, etc., and similarly, the second sealing member 223 can also be directly used as the oleophilic and hydrophobic structure, i.e., the material of the second sealing member 223 can be, for example, the alkyl ethylene polymer fiber, the long-chain alkyl methacrylate fiber, etc., and the present disclosure is not limited in this regard.

In addition, the light-transmitting structure 3 can be configured in any suitable manner. For example, the light-transmitting structure 3 can include a first light-transmitting part 31 connected to the first plate body 212 and a second light-transmitting part 32 connected to the second plate body 222, and the first sealing member 213, the second sealing member 223, the first plate body 212, the second plate body 222, the first light-transmitting part 31, and the second light-transmitting part 32 jointly define the chamber 2. In this way, light rays converge or diverge after sequentially passing through the first light-transmitting part 31, the first liquid and the second liquid in the chamber 2, and the second light-transmitting part 32.

In an embodiment, at least one of the first light-transmitting part 31 and the second light-transmitting part 32 can be perpendicular to the central axis of the interface between the first liquid and the second liquid, so as to simplify the focusing process of the lens. The first light-transmitting part 31 and the second light-transmitting part 32 can also not be perpendicular to the central axis of the interface, and can be reasonably arranged according to the application requirements of the light path. The central axis of the interface between the first liquid and the second liquid can be understood as an axis that passes through the center of the interface between the first liquid and the second liquid and is perpendicular to the interface between the first liquid and the second liquid when the interface between the first liquid and the second liquid is in a flat state (without deformation such as convex or concave).

The first plate body 212 is arranged with a first light-transmitting hole 2121, the first light-transmitting part 31 is configured as a first optical lens 311 covering the first light-transmitting hole 2121, and/or the second plate body 222 is arranged with a second light-transmitting hole 2221, and the second light-transmitting part 32 is configured as a second optical lens 321 covering the second light-transmitting hole 2221. The first optical lens 311 and the second optical lens 321 can have the same or different materials. Specifically, the materials of the first optical lens 311 and the second optical lens 321 can be optical materials such as glass and plastic, so that the light rays converge or diverge after sequentially passing through the first optical lens 311, the first liquid and the second liquid in the chamber 2, and the second optical lens 321. In addition, the first plate body 212 is formed with a reserved groove for embedding the first optical lens 311, and the second plate body 222 is also formed with a reserved groove for embedding the second optical lens 321. The first optical lens 311 and the second optical lens 321 can be fixed in the corresponding reserved grooves by bonding.

It should be noted that the inner diameters of the first light-transmitting hole 2121 and the second light-transmitting hole 2221 can be changed to adjust the light-transmitting aperture, and thus, in some other possible embodiments not shown in the drawings, the first plate body 212 and the first optical lens 311, and the second plate body 222 and the second optical lens 321 can be configured as an integrated modular structure, i.e., when the light-transmitting aperture needs to be adjusted, the first plate body 212 and the first optical lens 311, and the second plate body 222 and the second optical lens 321 can be replaced as a whole without the need to disassemble the first optical lens 311 and the second optical lens 321 from the first plate body 212 and the second plate body 222 and then mount the first optical lens 311 and the second optical lens 321 on the first plate body 212 with the first light-transmitting hole 2121 of a different dimension and the second plate body 222 with the second light-transmitting hole 2221 of a different dimension, and the adjustment process is more convenient. It can be understood that the inner diameters of the first light-transmitting hole 2121 and the second light-transmitting hole 2221 are the apertures of the lens, for example, the lens provided by the present disclosure can achieve precise zooming of a large-aperture liquid lens compared with the prior art, for example, the radial dimension of the first light-transmitting hole and/or the second light-transmitting hole can be not less than 30 mm, i.e., the lens provided by the present disclosure can achieve precise zooming of a large-aperture lens of more than 30 mm, for example, can achieve precise zooming of a large-aperture lens of 50 mm, 100 mm, 150 mm, 200 mm, 250 mm, 300 mm, 350 mm, 400 mm, 450 mm, 500 mm, etc.

In some embodiments, the first sealing member 213 and the second sealing member 223 have the same inner diameter, and the length of at least one of the first sealing member 213 and the second sealing member 223 along the central axis of the interface is not less than one fifth of the inner diameter of the first sealing member 213 or the second sealing member 223. In this way, the accommodation space in the chamber 2 can be increased, i.e., more first liquid and second liquid can be accommodated, and then the interface between the first liquid and the second liquid has a larger deformation space, so as to broaden the zooming range of the lens. In addition, ensuring the length of the first sealing member 213 and the second sealing member 223 along the central axis of the interface can also increase the contact area of the hydrophilic and oleophobic structure and the hydrophilic medium and the contact area of the oleophilic and hydrophobic structure and the oleophilic medium, so as to enhance the surface energy of the hydrophilic and oleophobic structure for limiting the flow of the hydrophilic medium and the surface energy of the oleophilic and hydrophobic structure for limiting the flow of the oleophilic medium.

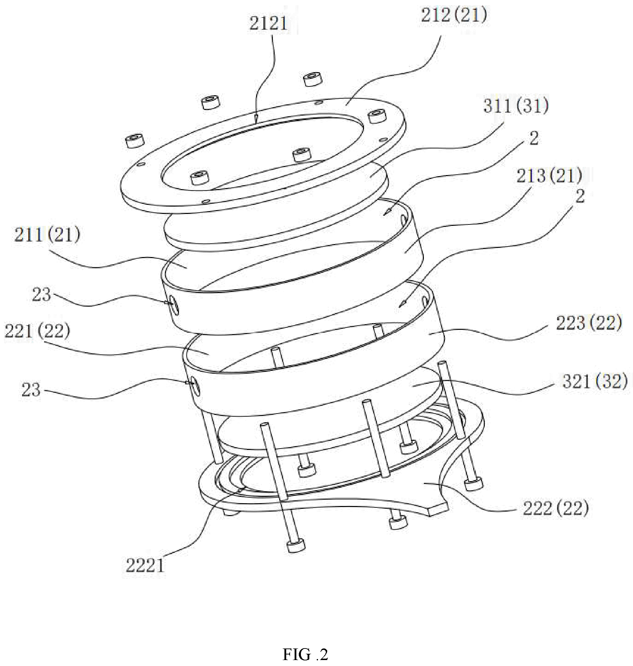

In some embodiments, as shown in FIG. 1 and FIG. 2, the first plate body 212 and the second plate body 222 are connected by a connecting assembly 5 to ensure that the first sealing member 213 and the second sealing member 223 are clamped between the first plate body 212 and the second plate body 222. The connecting assembly 5 can be configured in any suitable manner, for example, the connecting assembly 5 can be configured as a plurality of fastening bolts and fastening nuts, the fastening bolts can pass through the first plate body 212 and the second plate body 222, and the corresponding fastening bolts can be threadedly locked by the fastening nuts, and the first sealing member 213 and the second sealing member 223 can be clamped and fixed by fixing the first plate body 212 and the second plate body 222. In some other possible embodiments not shown in the drawings, the connecting assembly 5 can also include a plurality of supporting rods arranged between the first plate body 212 and the second plate body 222, the plurality of supporting rods can be connected between the first plate body 212 and the second plate body 222 by bonding or snapping, and the present disclosure does not limited in this regard.

According to a second aspect of the present disclosure, a lens is provided, and the lens includes the optical apparatus and the first liquid and the second liquid filled in the chamber 2 of the optical apparatus. The lens has all the beneficial effects of the optical apparatus.

The first liquid can be matched with the structure of the first wall 21, for example, the first wall 21 can be at least partially configured as the hydrophilic and oleophobic structure, and accordingly, the first liquid can be the hydrophilic medium, for example, the salt solution or the alcohol solution, such as the aqueous solution of sodium chloride, potassium chloride, sodium sulfate, etc., or ethylene glycol, propylene glycol, propylene carbonate, etc., so as to provide the surface energy for limiting the movement of the first liquid through the hydrophilic and oleophobic structure.

Similarly, the second liquid can be matched with the structure of the second wall 22, for example, the second wall 22 can be at least partially configured as the oleophilic and hydrophobic structure, and accordingly, the second liquid can be the oleophilic medium, for example, the transparent oily liquid, such as silicone oil, germanium oil, dimethyl silicone oil, or the optical fluid, etc., so as to provide the surface energy for limiting the movement of the oleophilic medium through the oleophilic and hydrophobic structure.

In some embodiments, the first liquid and the second liquid can have the same density, when the lens is placed non-vertically, the first liquid and the second liquid in the chamber 2 will not flow obviously due to the effect of gravity, and thus the surface shape of the interface between the first liquid and the second liquid is relatively stable, the optical axis is relatively stable, and the imaging effect and the imaging stability are relatively good. In the present disclosure, the "surface shape" refers to the convex, concave, or flat shape of the interface between the first liquid and the second liquid, after the quantities of the first liquid and the second liquid in the chamber 2 is adjusted through the control assembly 4.

According to a third aspect of the present disclosure, a lens adjusting system is provided, and the lens adjusting system includes the lens and the control assembly 4.

As shown in FIG. 4, the control assembly 4 can include a first liquid quantity control structure 41 and a second liquid quantity control structure 42. The first liquid quantity control structure 41 includes a first liquid inlet tube 411 communicated with the through hole 23 in the first wall 21 and a first pumping device 412 arranged on the first liquid inlet tube 411. The second liquid quantity control structure 42 includes a second liquid inlet tube 421 communicated with the through hole 23 in the second wall 22 and a second pumping device 422 arranged on the second liquid inlet tube 421. In this way, the first liquid can be pumped into or out of the chamber 2 through the first pumping device 412 and the first liquid inlet tube 411, and the second liquid can be pumped into or out of the chamber 2 through the second pumping device 422 and the second liquid inlet tube 421. For example, when the interface between the first liquid and the second liquid needs to be convex to form the positive lens, the second pumping device 422 is turned on and the second liquid is pumped into the chamber 2 through the second liquid inlet tube 421, and at the same time, the first pumping device 412 is turned on and the first liquid is pumped out of the chamber 2 through the first liquid inlet tube 411, so that the interface between the first liquid and the second liquid is convex to form the positive lens. The first liquid inlet tube 411 and the second liquid inlet tube 421 can be, for example, rubber hoses, and the first pumping device 412 and the second pumping device 422 can be, for example, mechanical peristaltic pumps.

Alternatively, in a further embodiment, not shown, the control assembly 4 includes a pumping device, the pumping device is communicated with the through hole 23 in the first wall 21 through a first liquid pipe and communicated with the through hole 23 in the second wall 22 through a second liquid pipe. The pumping device can be, for example, a syringe pump, the syringe pump includes a first syringe and a second syringe, the first syringe is communicated with the through hole 23 in the first wall 21 through the first liquid pipe to pump the first liquid in and out, and the second syringe is communicated with the through hole 23 in the second wall 22 through the second liquid pipe to pump the second liquid in and out.

The control assembly 4 can include the first liquid quantity control structure 41 and the second liquid quantity control structure 42 as an example, as shown in FIG. 4, the control assembly 4 further includes a first liquid outlet pipe 43, a second liquid outlet pipe 44 and a liquid storage structure 45, the first liquid outlet pipe 43 is communicated with another through hole 23 in the first wall 21, and the second liquid outlet pipe 44 is communicated with another through hole 23 in the second wall 22. The first liquid outlet pipe 43 is communicated with the liquid storage structure 45, and a stop valve 46 is arranged on each the first liquid inlet pipe 411 and the second liquid outlet pipe 44. In this way, in the filling process of the first liquid and the second liquid, the stop valve 46 on the second liquid outlet pipe 44 is opened first, at this time, the stop valve 46 on the first liquid inlet pipe 411 is in a closed state, the second pumping device 422 is turned on and the second liquid is pumped into the chamber 2 through the second liquid inlet pipe 421. When the liquid level height of the second liquid is consistent with the length of the second sealing member 223 along the central axis of the interface, the second pumping device 422 and the stop valve 46 on the second liquid outlet pipe 44 are closed. Then the stop valve 46 on the first liquid inlet pipe 411 is opened, the first pumping device 412 is turned on and the first liquid is pumped into the chamber 2 through the first liquid inlet pipe 411. When the liquid level height of the first liquid is consistent with the length of the first sealing member 213 along the central axis of the interface and a certain quantity of the first liquid is filled in the liquid storage structure 45, the first pumping device 412 and the stop valve 46 on the first liquid inlet pipe 411 are closed, and the filling process of the first liquid and the second liquid is completed.

It can be understood that the second liquid outlet pipe 44 can also be communicated with the liquid storage structure 45, and the stop valve 46 is arranged on each of the second liquid inlet pipe 421 and the first liquid outlet pipe 43, in this way, the filling process of the first liquid and the second liquid is similar to the above case, and the present disclosure will not be described herein.

The present disclosure exemplarily shows the installation and use process of the optical apparatus, the lens and the lens adjusting system.

First, the first plate body 212, the first sealing member 213, the second sealing member 223 and the second plate body 222 are sequentially bonded, then the fastening bolts are sequentially passed through the first plate body 212 and the second plate body 222 and are threadedly locked by the fastening nuts to complete the installation of the optical apparatus, and then the first pumping device 412 and the first liquid inlet pipe 411, the second pumping device 422 and the second liquid inlet pipe 421, the first liquid outlet pipe 43 and the second liquid outlet pipe 44 are communicated with the chamber 2 through the through holes 23.

Afterwards, the liquid is filled. First, the stop valve 46 on the second liquid outlet pipe 44 is opened, at this time, the stop valve 46 on the first liquid inlet pipe 411 is closed, the second pumping device 422 is turned on, and the second liquid is pumped into the chamber 2 through the second liquid inlet pipe 421. When the liquid level of the second liquid is consistent with the length of the second sealing element 223 along the central axis of the interface, the second pumping device 422 and the stop valve 46 on the second liquid outlet pipe 44 are closed. Then, the stop valve 46 on the first liquid inlet pipe 411 is opened, the first pumping device 412 is turned on, and the first liquid is pumped into the chamber 2 through the first liquid inlet pipe 411. When the liquid level of the first liquid is consistent with the length of the first sealing element 213 along the central axis of the interface and a certain quantity of the first liquid is filled in the liquid storage structure 45, the first pumping device 412 and the stop valve 46 on the first liquid inlet pipe 411 are closed, and the filling process of the first liquid and the second liquid is completed.

In use of the lens, when the interface between the first liquid and the second liquid needs to be convex to form the positive lens, the second pumping device 422 is turned on, and the second liquid is pumped into the chamber 2 through the second liquid inlet pipe 421. The first liquid away from the hydrophilic and oleophobic structure and the second liquid away from the oleophilic and hydrophobic structure flow. At this time, the first liquid flows into the liquid storage structure 45, and then the interface between the first liquid and the second liquid is convex to form the positive lens. The pumping is continued until the focal length adjustment requirement is met.

When the interface between the first liquid and the second liquid needs to be concave to form the negative lens, the second pumping device 422 is turned on, and the second liquid is pumped out of the chamber 2 through the second liquid inlet pipe 421. The first liquid away from the hydrophilic and oleophobic structure and the second liquid away from the oleophilic and hydrophobic structure flow. At this time, the first liquid flows into the chamber 2 from the liquid storage structure 45, and then the interface between the first liquid and the second liquid is concave to form the negative lens. The pumping is continued until the focal length adjustment requirement is met.

In addition, the present disclosure exemplarily shows the specific structural parameters and focal length adjustment ranges of some lenses.

Example 1: the diameters of the first light-transmitting hole 2121 and the second light-transmitting hole 2221 are both 50 mm, the lengths of the first sealing element 213 and the second sealing element 223 along the direction parallel to the central axis of the interface between the first liquid and the second liquid are both 50 mm, the first liquid is colorless and transparent silicone oil with the refractive index of 1.65 and the Abbe number of 62.8, accordingly, the material of the first sealing element 213 is the alkyl ethylene polymer fiber, the second liquid is NaCl aqueous solution with the refractive index of 1.33 and the Abbe number of 55.8, accordingly, the material of the second sealing element 223 is fluoroalkyl acrylic acid oligomer, and through calculation, the shortest negative focal length of the lens is -75.5 mm, and the shortest positive focal length is 75.8 mm.

Example Two: the diameters of the first light-transmitting hole 2121 and the second light-transmitting hole 2221 are both 100mm, the lengths of the first sealing member 213 and the second sealing member 223 along the direction parallel to the central axis of the interface between the first liquid and the second liquid are both 100mm, the first liquid is colorless transparent silicone oil with the refractive index of 1.65 and the Abbe number of 62.8, accordingly, the material of the first sealing member 213 is alkyl ethylene polymer fiber, the second liquid is NaCl aqueous solution with the refractive index of 1.33 and the Abbe number of 55.8, accordingly, the material of the second sealing member 223 is fluoroalkyl acrylic acid oligomer, through calculation, the shortest negative focal length of the lens is -151.2mm, and the shortest positive focal length is 151.5mm.

Example Three: the diameters of the first light-transmitting hole 2121 and the second light-transmitting hole 2221 are both 200mm, the lengths of the first sealing member 213 and the second sealing member 223 along the direction parallel to the central axis of the interface of the first liquid and the second liquid are both 200mm, the first liquid is colorless transparent silicone oil with the refractive index of 1.65 and the Abbe number of 62.8, accordingly, the material of the first sealing member 213 is alkyl ethylene polymer fiber, the second liquid is NaCl aqueous solution with the refractive index of 1.33 and the Abbe number of 55.8, accordingly, the material of the second sealing member 223 is fluoroalkyl acrylic acid oligomer, through calculation, the shortest negative focal length of the lens is -302.5mm, and the shortest positive focal length is 302.8mm.

The preferred embodiments of the present disclosure are described in detail above with reference to the drawings, but the present disclosure is not limited to the specific details of the above embodiments, and various simple modifications can be made to the technical solutions of the present disclosure within the technical concept of the present disclosure, and these simple modifications all belong to the protection scope of the present disclosure.

In addition, it should be noted that each of the technical features described in the above embodiments can be combined by any appropriate manner without contradiction, and in order to avoid unnecessary repetition, the present disclosure will not describe various possible combination manners.

In addition, any combination of the various embodiments of the present disclosure can also be made as long as it does not contradict the idea of the present disclosure, and it should also be considered as disclosed by the present disclosure.

## Claims

1. An optical apparatus comprising:
a housing (1); and
a light-transmitting structure (3) arranged on the housing (1), the housing (1) and the light-transmitting structure (3) defining a chamber (2) configured to accommodate a first liquid and a second liquid having different refractive indexes and being immiscible with each other, the light-transmitting structure (3) being configured to form a light path for light together with the first liquid and the second liquid, the chamber (2) comprising a first wall (21) configured to be in contact with the first liquid and a second wall (22) configured to be in contact with the second liquid, the first wall (21) being configured to provide surface energy for limiting movement of the first liquid, the second wall (22) being configured to provide surface energy for limiting movement of the second liquid, the first wall (21) and the second wall (22) each being arranged with at least one through hole (23), and the at least one through hole (23) being configured to communicate with a control assembly (4) to adjust the quantities of the first liquid and the second liquid through the control assembly (4) to change a radius of curvature of an interface between the first liquid and the second liquid.

2. The optical apparatus according to claim 1, wherein the first wall (21) is at least partially configured as a hydrophilic and oleophobic structure, and the second wall (22) is at least partially configured as an oleophilic and hydrophobic structure.

3. The optical apparatus according to claim 1 or 2, wherein the first wall (21) comprises a first composite layer (211), and the first composite layer (211) comprises a first support layer and a hydrophilic and oleophobic structure stacked on the inner side of the first support layer; and/or, the second wall (22) comprises a second composite layer (221), and the second composite layer (221) comprises a second support layer and an oleophilic and hydrophobic structure stacked on the inner side of the second support layer.

4. The optical apparatus according to claim 2 or 3, wherein the first wall (21) comprises a first plate body (212) and a first sealing member (213), the second wall (22) comprises a second plate body (222) and a second sealing member (223), the first sealing member (213) and the second sealing member (223) are abutted and located between the first plate body (212) and the second plate body (222), the light-transmitting structure (3) comprises a first light-transmitting part (31) connected to the first plate body (212) and a second light-transmitting part (32) connected to the second plate body (222), the first sealing member (213), the second sealing member (223), the first plate body (212), the second plate body (222), the first light-transmitting part (31) and the second light-transmitting part (32) jointly define the chamber (2), the first sealing member (213) comprises the hydrophilic and oleophobic structure, and the second sealing member (223) comprises the oleophilic and hydrophobic structure.

5. The optical apparatus according to claim 4, wherein at least one of the first light-transmitting part (31) and the second light-transmitting part (32) is perpendicular to the central axis of the interface.

6. The optical apparatus according to claim 4 or 5, wherein the first plate body (212) is arranged with a first light-transmitting hole (2121), and the first light-transmitting part (31) is configured as a first optical lens (311) covering the first light-transmitting hole (2121), and/or the second plate body (222) is arranged with a second light-transmitting hole, and the second light-transmitting part (32) is configured as a second optical lens (321) covering the second light-transmitting hole (2221).

7. The optical apparatus according to claim 6, wherein a radial dimension of the first light-transmitting hole (2121) and/or the second light-transmitting hole (2221) is not less than 30 mm.

8. The optical apparatus according to claim 6 or 7, wherein the first sealing member (213) and the second sealing member (223) have the same inner diameter, and a length of at least one of the first sealing member (213) and the second sealing member (223) along the central axis of the interface is not less than one fifth of the inner diameter of the first sealing member (213) or the second sealing member (223).

9. The optical apparatus according to any one of claims 4 to 8, wherein the first plate body (212) and the second plate body (222) are connected by a connecting assembly (5) to ensure that the first sealing member (213) and the second sealing member (223) are clamped between the first plate body (212) and the second plate body (222).

10. A lens, comprising the optical apparatus according to any one of claims 1 to 9 and a first liquid and a second liquid filled in the chamber (2).

11. The lens according to claim 10, wherein the first liquid is a hydrophilic medium and the second liquid is an oleophilic medium.

12. The lens according to claim 10 or 11, wherein the first liquid and the second liquid have the same density.

13. A lens adjusting system, comprising the lens according to any one of claims 10 to 12 and the control assembly (4).

14. The lens adjusting system according to claim 13, wherein the control assembly (4) comprises a first liquid quantity control structure (41) and a second liquid quantity control structure (42), the first liquid quantity control structure (41) comprising a first liquid inlet pipe (411) communicated with the through hole (23) in the first wall (21) and a first pumping device (412) arranged on the first liquid inlet pipe (411), and the second liquid quantity control structure (42) comprising a second liquid inlet pipe (421) communicated with the through hole (23) in the second wall (22) and a second pumping device (422) arranged on the second liquid inlet pipe (421).

15. The lens adjusting system according to claim 14, wherein the control assembly (4) further comprises a first liquid outlet pipe (43), a second liquid outlet pipe (44) and a liquid storage structure (45), the first liquid outlet pipe (43) is communicated with another through hole (23) in the first wall (21), and the second liquid outlet pipe (44) is communicated with another through hole (23) on the second wall (22);
the first liquid outlet pipe (43) is communicated with the liquid storage structure (45), and a stop valve (46) is arranged on each of the first liquid inlet pipe (411) and the second liquid outlet pipe (44); or,
the second liquid outlet pipe (44) is communicated with the liquid storage structure (45), and a stop valve (46) is arranged on each of the second liquid inlet pipe (421) and the first liquid outlet pipe (43).

16. The lens adjusting system according to any one of claims 13 to 15, wherein the control assembly (4) comprises a pumping device, the pumping device is communicated with the through hole (23) in the first wall (21) through a first liquid pipe, and the pumping device is communicated with the through hole (23) in the second wall (22) through a second liquid pipe.
